# EUROPÄISCHE PATENTSCHRIFT

(11) **EP 1 955 398 B1**
(45) Veröffentlichungstag und Bekanntmachung des Hinweises auf die Patenterteilung: **03.10.2012**
(21) Anmeldenummer: 06819581.7
(22) Anmeldetag: 17.11.2006
(51) Int. Cl.: H01M 8/04

(54) **BRENNSTOFFZELLENANLAGE MIT EINER DOSIEREINHEIT**
FUEL CELL INSTALLATION COMPRISING A DOSING UNIT
ENSEMBLE DE PILES A COMBUSTIBLE COMPRENANT UNE UNITE DE DOSAGE

(30) Priorität: 23.11.2005 DE 102005055741
(43) Veröffentlichungstag der Anmeldung: 13.08.2008
(73) Patentinhaber: ROBERT BOSCH GMBH, 70442 Stuttgart (DE); GM Global Technology Operations LLC, Detroit, MI 48265-3000 (US)
(72) Erfinder: BRENNER, Frank, 71686 Remseck (DE); BANTLEON, Guenther, 71229 Leonberg (DE); NGUYEN-SCHAEFER, Thanh-Hung, 71679 Asperg (DE); HEBNER, Thomas, 71254 Ditzingen (DE); SPARSCHUH, Jens-Uwe, 55299 Nackenheim (DE)
(86) Internationale Anmeldenummer: PCT/EP2006/068609
(87) Internationale Veröffentlichungsnummer: WO 2007/060139

(56) Entgegenhaltungen:
- WO-A-2005/036682
- US-A- 6 103 410
- US-A1- 2004 197 610
- US-B1- 6 358 638

## Beschreibung

Die Erfindung betrifft eine Brennstoffzellenanlage mit einer Brennstoffzelleneinheit, wobei eine wenigstens ein Dosierventil umfassende Dosiereinheit zum Dosieren eines Brennstoffs, insbesondere von Wasserstoff vorgesehen ist, nach dem Oberbegriff des Anspruchs 1.

### Stand der Technik

Heutige Brennstoffzellensysteme sowohl für stationäre als auch für mobile Anwendungen werden im Allgemeinen derart betrieben, dass die Anodenseite mit Brennstoff, insbesondere Wasserstoff, und die Kathodenseite mit Sauerstoff, insbesondere Luft, versorgt werden. Die zugeführten und abgeführten Gasströme werden hierbei durch den Brennstoffzellenstack gepumpt bzw. geblasen und abgelassen.

Teilweise wird vor allem auf der Anodenseite des Stacks ein relativ hoher Anteil an nicht umgesetztem Wasserstoff abgeblasen. Teilweise wird das wasserstoffreiche Anodenabgas im Kreis gepumpt bzw. rezikliert, um den Gesamtwirkungsgrad des Systems zu verbessern.

Weiterhin werden gewöhnlicherweise zumindest die Kathodengase vor dem Eintritt in den Brennstoffzellenstack befeuchtet, um die protonenleitende Membran des Stacks nicht auszutrocknen. Entsprechende Membranen bzw. MEA (Membran Electrode Assembly) müssen eine gewisse Mindestfeuchtigkeit aufweisen, um die Protonen durchleiten zu können.

Zur Kraftstoff- bzw. Brennstoff Versorgung des Brennstoffzellensystems ist eine bedarfsgerechte Zuführung der Betriebsstoffströme bzw. von Wasserstoff und Luftsauerstoff in den Brennstoffzellenstacks notwendig. Derartige Systeme können verschiedenartig aufgebaut sein. Zum Beispiel sind Dosiersysteme mit einem oder mehreren Dosierventilen vorgesehen, um einen möglichst großen Dosierbereich mit vergleichsweise geringerer Toleranz bezüglich der zu dosierenden Menge zu gewährleisten.

Zudem sind bereits Gasversorgungssysteme bekannt, wobei der Brennstoffzellenstack einerseits mit der geforderten Menge an Brennstoff bzw. Wasserstoff versorgt und andererseits in einer Startphase nicht nur die Anode, sondern auch die Kathode des Stocks mit Wasserstoff bzw. Brennstoff versorgt wird. Letzteres wird aus dem Grund realisiert, um den kalten Brennstoffzellenstack möglichst schnell auf die notwendige bzw. optimale Betriebstemperatur zu erwärmen, wobei der im Brennstoffzellenstack vorhandene Luftsauerstoff unter Wärmeabgabe mit dem Brennstoff bzw. dem Wasserstoff reagiert und somit Wärmeenergie freisetzt.

Die Kathode des Brennstoffzellenstacks benötigt in der Startphase außerordentlich geringe Wasserstoffmengen, so dass das Startventil entsprechend klein dimensioniert werden muss, was die Verwendung speziell entwickelte Startventile notwendig macht. Dies führt allerdings zu vergleichsweise hohen Kosten.

Die Druckschrift WO 2005/036682 A1 beschreibt ein Verfahren und eine Vorrichtung zum Betrieb eines Brennstofgfzellensystems.

### Aufgabe und Vorteile der Erfindung

Aufgabe der Erfindung ist es demgegenüber, eine Brennstoffzellenanlage mit einer Brennstoffzelleneinheit, wobei eine wenigstens ein Dosierventil umfassende Dosiereinheit zum Dosieren eines Brennstoffs für wenigstens eine Anode der Brennstoffzelleneinheit und wobei ein Startventil zum Dosieren des Brennstoffes für wenigstens eine Kathode der Brennstoffzelleneinheit in einer Startphase vorgesehen ist, vorzuschlagen, die kostengünstiger hergestellt bzw. betrieben werden kann.

Diese Aufgabe wird, ausgehend von einer Brennstoffzellenanlage der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Brennstoffzellenanlage dadurch aus, dass wenigstens ein eine festgelegte, lichte Querschnittsfläche umfassendes Drosselelement zum Festlegen der maximal dosierbaren Brennstoffmenge, insbesondere für die Kathode, in der Startphase vorgesehen ist. Mit einem derartig vorteilhaften Drosselelement gemäß der Erfindung wird es möglich, die vergleichsweise kleine, in der Startphase benötigte Brennstoffmenge vor allem für die Kathode zu begrenzen. Hierdurch wird es möglich, auf aufwändige bzw. teure Entwicklungen spezieller Startventile zu verzichten. Dementsprechend verringern sich die Kosten für die Herstellung erfindungsgemäßer Brennstoffzellenanlagen.

Darüber hinaus wird gemäß der Erfindung es möglich, dass beispielsweise Brennstoffzellenanlagen mit unterschiedlichster Leistung Startventile desselben Typs bzw. in identischer Bauform umfassen. Die maximal zu dosierende Brennstoffmenge in der Startphase für unterschiedlich leistungsstarke Brennstoffzelleneinheiten wird in vorteilhafter Weise durch das Drosselelement mit fester, lichter Querschnittsfläche vorgegeben. Drosselelemente mit unterschiedlichen lichten Querschnittsflächen bzw. Bohrungen oder dergleichen sind einfach herstellbar. Demzufolge wird gemäß der Erfindung auch eine Reduktion des Entwicklungs- bzw. Herstellungsaufwands von Brennstoffzellensystemen mit unterschiedlichsten Leistungen verwirklicht.

Beispielsweise ist das Drosselelement in Strömungsrichtung des Brennstoffs vor dem Startventil angeordnet. Vorzugsweise ist das Drosselelement in Strömungsrichtung des Brennstoffs hinter dem Startventil angeordnet. Es hat sich gezeigt, dass hiermit eine besonders vorteilhafte Dosierung der Brennstoffmenge in der Startphase realisiert werden kann.

In einer vorteilhaften Variante der Erfindung ist das Startventil im Wesentlichen baugleich wie das Dosierventil ausgebildet. Mit Hilfe dieser Maßnahme wird es möglich, dass beispielsweise identische Dosierventile und Startventile in einer Brennstoffzellenanlage gemäß der Erfindung verwendet werden, wodurch sich der Aufwand für die Lagerung der Teile bzw. Montage erfindungsgemäßer Brennstoffzellenanlagen reduziert.

Darüber hinaus kann auf eine im Wesentlichen identische Steuerung bzw. auf identische Kontrolleinheiten zum Steuern bzw. Dosieren der verwendeten Ventile bzw. der Stoffmenge zurückgegriffen werden. Hierdurch wird eine weitere Vereinfachung bzw. Kostenreduktion im Vergleich zum Stand der Technik erreicht.

In einer besonderen Weiterbildung der Erfindung umfasst die Dosiereinheit mehrere Dosierventile, die insbesondere parallel verschaltet und/oder im Wesentlichen baugleich ausgebildet sind. Hiermit wird es einerseits möglich, eine vergleichsweise große zu dosierende Brennstoffmenge mit relativ kleiner Toleranz über den gesamten Dosierbereich zu realisieren. Andererseits wird hiermit wiederum durch die baugleiche Verwendung der Ventile sowohl die Lagerhaltung, Montage als auch die Steuerung vereinfacht, was wirtschaftlich von Vorteil ist.

Vorzugsweise wird als Startventil und/oder als Dosierventile handelsübliche Ventile verwendet, was die Kosten weiter reduziert.

Vorteilhafterweise ist wenigstens eine Spüleinheit zum Spülen der Brennstoffzelleneinheit mit einem Spülfluid, insbesondere mit Luft, vorgesehen. Mit einer derartigen Spüleinheit kann beispielsweise die Ansammlung von kritischen Wasserstoffmengen oder dergleichen im System ausgeschlossen werden. Beispielsweise wird nach dem Abschalten des Systems dieses mit Luft oder dergleichen gespült.

In einer vorteilhaften Variante der Erfindung weist die Dosiereinheit wenigstens eine Umkehrvorrichtung zum Umkehren der Durchströmungsrichtung des Brennstoffs zumindest in der Anode der Brennstoffzelleneinheit auf. Mit Hilfe dieser Maßnahme können lokale Inhomogenitäten bezüglich der Feuchte/Trockenheit der Membran der Brennstoffzelleneinheit in vorteilhafter Weise ausgeglichen bzw. beseitigt werden. Hierdurch wird der Wirkungsgrad der Brennstoffzelleneinheit verbessert und die Beanspruchung der Brennstoffzelleneinheit bzw. der Membran entscheidend reduziert, was sich gegebenenfalls in einer höheren Lebenserwartung niederschlägt.
Möglicherweise wird ein periodisches Einfüllen und Entleeren der Brennstoffzelleneinheit, vergleichbar mit der Atmung von Lebewesen, realisiert. In einer besonderen Weiterbildung der Erfindung wird die Umkehrung der Strömungsrichtung des Brennstoffs in der Anode der Brennstoffzelleneinheit dadurch realisiert, dass die Anode abwechselnd von der einen Seite und anschließend von der anderen Seite her durchströmt wird. Dies bedeutet, dass der Eingang bzw. der Ausgang der Brennstoffzelleneinheit bzw. der Anode ständig wechselt.

Vorzugsweise umfasst eine Baueinheit wenigstens die Dosiereinheit und/oder das Startventil und/oder die Spüleinheit und/oder eine Druckmessvorrichtung zum Erfassen des Brennstoffdrucks. Mit Hilfe einer dieser Maßnahmen kann eine besonders kompakte Einheit realisiert werden, die im Wesentlichen die Gasversorgung bzw. die Versorgung der Brennstoffzelleneinheit mit Brennstoff und/oder Sauerstoff bzw. Luft umfasst. Derartig kompakte Gasversorgungseinheiten sind insbesondere bei Fahrzeuganwendungen, wie z.B. im Pkw, von besonderem Vorteil.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: ein schematisches Blockschaltbild einer Brennstoffzellenanlage gemäß der Erfindung und
- Figur 2: eine schematische, perspektivische Darstellung einer Gasversorgungseinheit gemäß der Erfindung.

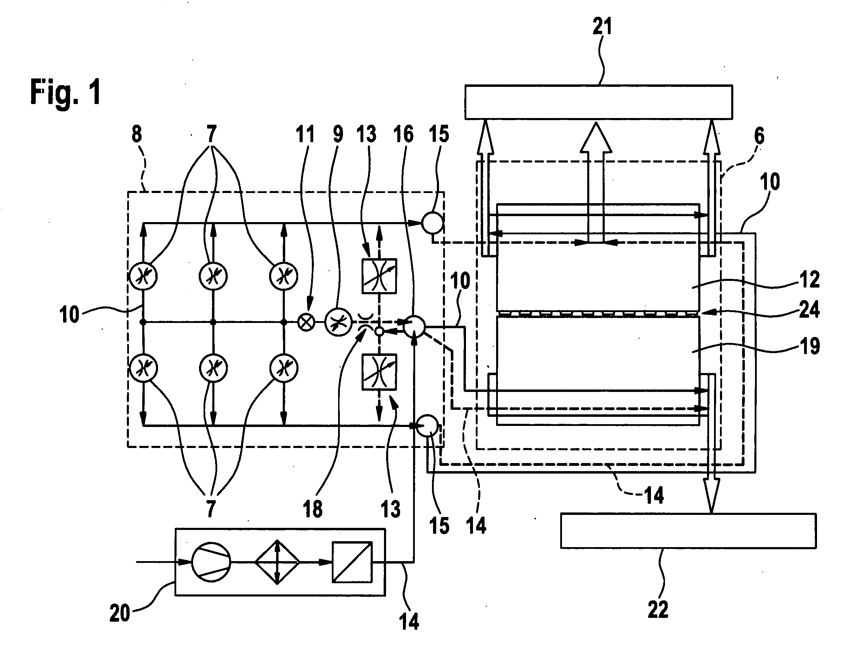

Das in Figur 1 dargestellte Blockschaltbild einer Brennstoffzellenanlage gemäß der Erfindung umfasst eine Brennstoffzelleneinheit 6, die mittels einer Gasversorgungseinheit 8 bzw. in dem dargestellten Ausführungsbeispiel einer sogenannten AIU (Anode Inlet Unit) 8 mit einem Brennstoff bzw. mit Wasserstoff 10 für eine Anode 12 sowie mit Luft 14 für eine Kathode 19 versorgt wird.

Der AIU 8 neben- bzw. vorgeordnet ist eine Luftversorgungseinheit 20 bzw. sogenannte CIU (Cathode Inlet Unit) 20. Diese umfasst einen Druckerzeuger und/oder Filter und/oder Befeuchter, etc., wie dies bereits üblich ist.

Das System weist weiterhin eine Anodenauslasseinheit (AOU: Anode Outlet Unit) 21 auf, mittels derer Anodenabgase abgeführt werden. Weiterhin ist eine Kathodenauslasseinheit (COU: Cathode Outlet Unit) 22 vorgesehen, mittels der Kathodenabgase abgeführt werden.

Die AIU 8 weist mehrere Dosierventile 7 auf, wobei gemäß der dargestellten Variante jeweils drei parallel verschaltete Ventile je Strang vorgesehen sind. Hierdurch kann ein großer Dosiermengenbereich mit vergleichsweise hoher Dosiergenauigkeit realisiert werden.

Die beiden parallel verschalteten Stränge mit jeweils drei parallel verschalteten Dosierventilen 7 sind insbesondere aus dem Grund vorgesehen, dass die Brennstoffzelleneinheit 10 bzw. die Anode 12 mit zwei entgegengerichteten Durchströmungsrichtungen mit Wasserstoff 10 durchströmbar ist. Hierzu werden die beiden Stränge jeweils wechselseitig zum Dosieren entsprechender Wasserstoffmengen betrieben bzw. geöffnet/geschlossen.

Darüber hinaus sind Spülventile 13 vorgesehen je Strang, wodurch es in vorteilhafter Weise möglich wird, die Anode 12 mittels Luft 14 ebenfalls in entgegengesetzter Richtung zu durchspülen. Dies erfolgt vorzugsweise nach dem Abschalten der Brennstoffzelleneinheit 6.

In der dargestellten Variante wird die Kathode 19 lediglich in eine Richtung mit Luft 14 gespült.

Weiterhin wird die Kathode 19 ebenfalls in einer Richtung von Wasserstoff 10 in einer Startphase durchströmt. Die Dosierung des Wasserstoffs für die Kathode 19 erfolgt mittels einem Startventil 9 sowie einer Drossel 18, die in Serie geschaltet sind.

Vorteilhafterweise weist die Drossel 18 einen fest eingestellten bzw. unveränderlichen lichten Querschnitt auf, der die maximal zu dosierende Menge begrenzt. Beim Startventil 9 kann es sich gemäß der Erfindung um ein augleiches Ventil wie die Dosierventile 7 handeln. Hierdurch wird sowohl die Lagerhaltung als auch die Steuerungen der vorhandenen Ventile entscheidend vereinfacht. Weiterhin ist von Vorteil, auf bereits handelsübliche Ventile zurückzugreifen.

Ein Drucksensor 11 ist weiterhin in der AIU 8 vorgesehen, der zur Überwachung eines möglichst konstant einzustellenden Brennstoffdrucks verwendet werden kann. Hierdurch wird die Dosierung des Brennstoffs bzw. Wasserstoffs 10 vor allem in der Startphase für die Kathode 19 weiter verbessert.

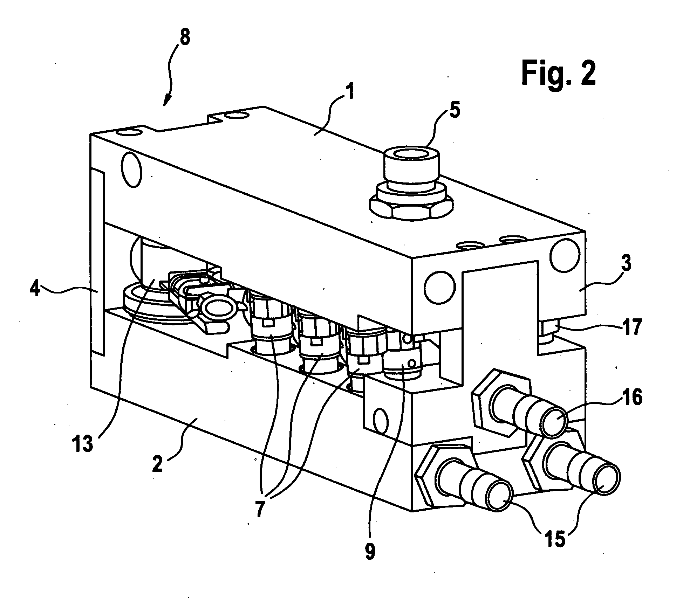

In Figur 2 ist schematisch in perspektivischer Darstellung eine Gasversorgung 8 bzw. ein AIU 8 als kompakte Baueinheit abgebildet. Die Gasversorgungseinheit 8 besteht aus einem Oberteil 1 und einem Unterteil 2 sowie zwei Seitenteilen 3, 4. Das Oberteil 1 verfügt über einen Anschluss 5 für die Brennstoff- bzw. Wasserstoffzuführung aus einem nicht näher dargestellten Hochdrucktank. Der Eingangsdruck kann beispielsweise etwa zwischen 3 bis 9 bar liegen. Der Wasserstoff 10 wird in einen nicht näher dargestellten Speicherraum der AIU 8 geführt und von dort auf die Dosierventile 7 verteilt.

Weiterhin wird mittels einer nicht näher dargestellten Zuleitung aus dem Speicherraum die Versorgung des Startventils 9 und eines nicht näher dargestellten Stichkanals zum Anschluss eines Drucksensors 11 realisiert.

Die Dosierventile 7 sind in der Art angeordnet, dass sich in dem dargestellten Beispiel zwei Reihen mit je drei Ventilen ergeben (vgl. Figur 1).

Die Brennstoffzelleneinheit 6 bzw. der Brennstoffzellenstack 6 wird in der ausgeführten Variante derart mit Wasserstoff 10 versorgt, dass wechselseitig je eine Reihe von Ventilen 7 den Brennstoffzellenstack einmal vom Eingang und einmal vom Ausgang her beströmen. Eine Membran 24 der Brennstoffzelleneinheit 6, die die Betriebsstoffe Wasserstoff 10 und Luftsauerstoff 14 trennt, wird mit dieser Verfahrensweise weitgehend gleichmäßig befeuchtet.

Darüber hinaus verfügt das Oberteil 1 über eine nicht näher dargestellte Versorgungsleitung, die die beiden Spülventile 13 mit Spülluft 14 versorgt. Das Unterteil 2 verfügt über zwei nicht näher dargestellte Kanäle mit Aufnahmen für die Spül- bzw. Dosierventile und Ausgänge 15, die jeweils an den Eingang bzw. Ausgang des Brennstoffzellenstacks 6 führen.

Ein Seitenteil 3 ist als Verbindungsteil ausgeführt. Über eine Luftzuleitung 16 wird zum einen über ein Verbindungsstück 17 Spülluft 14 zur Versorgung der Spülventile 13 in das Oberteil 1 geleitet, zum anderen ist eine Verbindung vom Startventil 9 über die eingebaute Drossel 18 für den Startvorgang gewährleistet. Das zweite Seitenteil 4 dient als Verbindungselement und Aufnahme für einen nicht näher dargestellten Anschlussstecker mit den notwendigen Kabelverbindungen.

## Patentansprüche

1. Brennstoffzellenanlage mit einer Brennstoffzelleneinheit (6), wobei eine wenigstens ein Dosierventil (7) umfassende Dosiereinheit (8) zum Dosieren eines Brennstoffs (10) für wenigstens eine Anode (12) der Brennstoffzelleneinheit (6) und wobei ein Startventil (9) zum Dosieren des Brennstoffs (10) für wenigstens eine Kathode (19) der Brennstoffzelleneinheit (6) in einer Startphase vorgesehen ist, **dadurch gekennzeichnet, dass** wenigstens ein eine festgelegt, lichte Querschnittsfläche umfassendes Drosselelement (18) zum Festlegen der maximal dosierbaren Brennstoffmenge in der Startphase vorgesehen ist.

2. Brennstoffzellenanlage nach Anspruch 1, **dadurch gekennzeichnet, dass** das Drosselelement (18) in Strömungsrichtung des Brennstoffs (10) hinter dem Startventil (9) angeordnet ist.

3. Brennstoffzellenanlage nach einem der vorgenannten Ansprüche, **dadurch gekennzeichnet**, das das Startventil (9) im Wesentlichen baugleich wie das Dosierventil (7) ausgebildet ist.

4. Brennstoffzellenanlage nach einem der vorgenannten Ansprüche, **dadurch gekennzeichnet, dass** die Dosiereinheit (8) mehrere Dosierventile (7) umfasst.

5. Brennstoffzellenanlage nach einem der vorgenannten Ansprüche, **dadurch gekennzeichnet, dass** die Dosierventile (7) im Wesentlichen baugleich ausgebildet sind.

6. Brennstoffzellenanlage nach einem der vorgenannten Ansprüche, **dadurch gekennzeichnet, dass** wenigstens eine Spüleinheit (13) zum Spülen der Brennstoffzelleneinheit (6) mit einem Spülfluid (14) vorgesehen ist.

7. Brennstoffzellenanlage nach einem der vorgenannten Ansprüche, **dadurch gekennzeichnet, dass** die Dosiereinheit (8) wenigstens eine Umkehrvorrichtung (7) zum Umkehren der Durchströmungsrichtung des Brennstoffs (10) in der Anode (12) der Brennstoffzelleneinheit (6) aufweist.

8. Brennstoffzellenanlage nach einem der vorgenannten Ansprüche, **dadurch gekennzeichnet, dass** eine Baueinheit (8) weinigstens die Dosiereinheit (8) und das startventil (9) umfaßt.

9. Brennstoffzellenanlage nach Anspruch 8
, **dadurch gekennzeichnet, dass** die Baueinheit (8) die Spüleinheit (13) nach Anspruch 6 aufweist.

10. Brennstoffzellenanlage nach Anspruch 8 oder 5
, **dadurch gekennzeichnet, dass** die Baueinheit (8) eine Druckmessvorrichtung (11) aufweist.

## Claims

1. Fuel cell system having a fuel cell unit (6), wherein a metering unit (8) which comprises at least one metering valve (7) and has the purpose of metering a fuel (10) for at least one anode (12) of the fuel cell unit (6) is provided, and wherein a starter valve (9) for metering the fuel (10) for at least one cathode (19) of the fuel cell unit (6) in a starting phase is provided, **characterized in that** at least one restrictor element (18) which comprises a defined clear cross-sectional area is provided for defining the maximum meterable fuel quantity in the starting phase.

2. Fuel cell system according to Claim 1, **characterized in that** the restrictor element (18) is arranged downstream of the starter valve (9) in the direction of flow of the fuel (10).

3. Fuel cell system according to one of the preceding claims, **characterized in that** the starter valve (9) is of substantially identical design to the metering valve (7).

4. Fuel cell system according to one of the preceding claims, **characterized in that** the metering unit (8) comprises a plurality of metering valves (7).

5. Fuel cell system according to one of the preceding claims, **characterized in that** the metering valves (7) are of substantially identical design.

6. Fuel cell system according to one of the preceding claims, **characterized in that** at least one rinsing unit (13) is provided for rinsing the fuel cell unit (6) with a rinsing fluid (14).

7. Fuel cell system according to one of the preceding claims, **characterized in that** the metering unit (8) has at least one reversal device (7) for reversing the direction of through-flow of the fuel (10) in the anode (12) of the fuel cell unit (6).

8. Fuel cell system according to one of the preceding claims, **characterized in that** a structural unit (8) comprises at least the metering unit (8) and the starter valve (9).

9. Fuel cell system according to Claim 8, **characterized in that** the structural unit (8) has the rinsing unit (13) according to Claim 6.

10. Fuel cell system according to Claim 8 or 9, **characterized in that** the structural unit (8) has a pressure-measuring device (11).

## Revendications

1. Ensemble de piles à combustible comprenant une unité de piles à combustible (6), une unité de dosage (8) comportant au moins une soupape de dosage (7) étant prévue pour doser un combustible (10) pour au moins une anode (12) de l'unité de piles à combustible (6), et une soupape de démarrage (9) étant prévue pour doser le combustible (10) pour au moins une cathode (19) de l'unité de piles à combustible (6) lors d'une phase de démarrage, **caractérisé en ce qu'**au moins un élément d'étranglement (18) présentant une aire de section transversale intérieure fixée est prévu pour fixer la quantité maximale de combustible pouvant être dosée lors de la phase de démarrage.

2. Ensemble de piles à combustible selon la revendication 1, **caractérisé en ce que** l'élément d'étranglement (18) est disposé derrière la soupape de démarrage (9) dans le sens d'écoulement du combustible (10).

3. Ensemble de piles à combustible selon l'une quelconque des revendications précédentes, **caractérisé en ce que** la soupape de démarrage (9) est réalisée avec une construction essentiellement identique à celle de la soupape de dosage (7).

4. Ensemble de piles à combustible selon l'une quelconque des revendications précédentes, **caractérisé en ce que** l'unité de dosage (8) comporte plusieurs soupapes de dosage (7).

5. Ensemble de piles à combustible selon l'une quelconque des revendications précédentes, **caractérisé en ce que** les soupapes de dosage (7) sont réalisées avec une construction essentiellement identique.

6. Ensemble de piles à combustible selon l'une quelconque des revendications précédentes, **caractérisé en ce qu'**au moins une unité de purge (13) est prévue pour purger l'unité de piles à combustible (6) à l'aide d'un fluide de purge (14).

7. Ensemble de piles à combustible selon l'une quelconque des revendications précédentes, **caractérisé en ce que** l'unité de dosage (8) comprend au moins un dispositif d'inversion (7) pour inverser le sens d'écoulement du combustible (10) dans l'anode (12) de l'unité de piles à combustible (6).

8. Ensemble de piles à combustible selon l'une quelconque des revendications précédentes, **caractérisé en ce qu'**une unité constructive (8) comporte au moins l'unité de dosage (8) et la soupape de démarrage (9).

9. Ensemble de piles à combustible selon la revendication 8, **caractérisé en ce que** l'unité constructive (8) comprend l'unité de purge (13) selon la revendication 6.

10. Ensemble de piles à combustible selon la revendication 8 ou 9, **caractérisée en ce que** l'unité constructive (8) comprend un dispositif de mesure de la pression (11).
